# EUROPEAN PATENT APPLICATION

(11) **EP 3 789 545 A1**
(43) Date of publication of application: **10.03.2021**
(21) Application number: 20192472.7
(22) Date of filing: 24.08.2020
(51) Int. Cl.: E02F 9/08, E02F 9/20

(54) **DRIVING ARRANGEMENT FOR CONSTRUCTION MACHINE**

(30) Priority: 03.09.2019 WO PCT/CN2019/104135
(71) Applicant: Guangxi LiuGong Machinery Co., Ltd., Liuzhou Guangxi 545007 (CN)
(72) Inventor: Wu, Weilin, Liuzhou, Guangxi 545007 (CN); Cai, Wen, Liuzhou, Guangxi 545007 (CN)
(74) Representative: WBH Wachenhausen Patentanwälte PartG mbB

(57) **Abstract**

The present invention relates to a driving arrangement for a construction machine, preferably for an excavator, comprising a hydraulic pump for powering a working equipment and/or locomotion of the construction machine through a hydraulic circuit, an electric motor for driving the hydraulic pump, and a supporting device for mounting the driving arrangement to the construction machine, the supporting device comprising a plate-like mounting portion with two opposing mounting surfaces, wherein the hydraulic pump is mounted to one of the mounting surfaces and the electric motor is mounted to the other mounting surface, and wherein power of the electric motor is transferable to the hydraulic pump via a mechanical connection means extending across the mounting portion of the supporting device.

## Description

### TECHNICAL FIELD

The present invention relates to a driving arrangement for a construction machine, and to a construction machine comprising such a driving arrangement. The construction machine may be an excavator.

### PRIOR ART

Electrical excavators are known, which comprise an electrical storage device for powering an electrical motor, the electrical motor driving a hydraulic pump via which hydraulic actuators of the excavator's boom may be actuated. CN 10 496 337 5 A relates to an excavator comprising an electric motor and a hydraulic pump.

### SUMMARY OF THE INVENTION

The present invention relates to a driving arrangement for a construction machine. The construction machine may be an excavator or any other type of construction machine. The excavator may comprise an undercarriage and a superstructure, which is pivotably provided on the undercarriage. The undercarriage may comprise one or multiple tracks for locomotion of the excavator, i.e. for moving the excavator forwards, backwards and/or sidewards. The construction machine, e.g. the superstructure of the excavator, may comprise a boom with multiple arms, which are movable with respect to each other via hydraulic actuators. The hydraulic actuators may be part of a hydraulic circuit of the construction machine.

The driving arrangement of the present invention comprises a hydraulic pump for powering a working equipment and/or locomotion of the construction machine through a hydraulic circuit. According to an embodiment, the hydraulic pump is suitable for powering the above-described hydraulic circuit comprising the multiple hydraulic actuators for moving the multiple arms of the construction machine's boom. Additionally or alternatively, the hydraulic pump may be configured to power a further hydraulic circuit via which means for locomotion of the excavator, e.g. tracks, may be driven. Furthermore, the driving arrangement comprises an electric motor for driving the hydraulic pump. The electric motor is configured, e.g. exhibits an output torque/power, suitable for driving the hydraulic pump. The electric motor may be a synchronous or asynchronous motor. According to an embodiment, the driving arrangement comprises only this one electric motor for driving the hydraulic pump, implying that the hydraulic pump is not driven by any other power source, in particular not by a combustion engine. The electric motor may be powered by an electrical storage unit, which may comprise multiple battery packs, wherein each battery pack may comprise multiple battery cells. Each of the battery packs may be configured to provide a current of multiple hundreds of Ampere, e.g. at a rated voltage of approximately 100V. In particular, the construction machine, e.g. the excavator, may be a pure electric excavator only comprising an electrical storage device as power source, in particular not comprising a combustion engine.

In addition, the driving arrangement comprises a supporting device suitable to mount the driving arrangement to the construction machine. The supporting device may be made from multiple components, which may be connected to each other via material bonding, e.g. welding, and/or bolts/screws or which may be integrally formed with each other. The supporting device may be made from steel. The supporting device comprises a plate-like mounting portion with two opposing mounting surfaces. Preferably, the mounting surfaces are situated parallel to each other. A plate-like portion according to the present invention may be a portion, which exhibits extensions in two perpendicular directions, which are significantly larger than the extension of the portion in a third direction, which is perpendicular to both the first and second directions.

In the driving arrangement according to the present invention, the hydraulic pump is mounted to one of the mounting surfaces and the electric motor is mounted to the other one of the mounting surfaces of the mounting portion of the supporting device. In other words, the hydraulic pump and the electric motor are mounted to opposite sides of the mounting portion of the driving arrangement. Furthermore, the driving arrangement comprises a connection means extending across the mounting portion of the supporting device, which is connected to the electric motor and the hydraulic pump for transferring a power of the electric motor to the hydraulic pump. The matter of fact that the connection means extends across the mounting portion implies that it extends across the thickness direction of the plate-like mounting portion.

The driving arrangement according to the present invention is compact, as both the hydraulic pump and the electric motor are mounted to the same portion of the supporting device. Furthermore, the driving arrangement ensures that the electric motor and the hydraulic pump are positioned closely with respect to each other, thereby minimizing positional displacement between the components due to disturbances exerted on only one of the components, for example. The driving arrangement of the present invention therefore ensures optimal alignment of the shafts of the electric motor and the hydraulic pump. Therefore, the driving arrangement according to the present invention is easy to assemble and requires low maintenance efforts.

According to an embodiment, the connection means via which power of the electric motor is transferable to the hydraulic pump is formed as a mechanical connection means, preferably as a rigid coupling. For providing the rigid coupling, the shaft of the electric motor may be connected to the shaft of the hydraulic pump in a torque-proof manner. Both shafts may exhibit a flange at one of their ends, wherein the flanges may be torque-proofly connected to each other via one or multiple bolts and/or screws. However, it is also conceivable that the shafts are connected via welding or in an arbitrary other fashion to provide a rigid coupling. The rigid coupling according to the invention must be distinguished from an elastic coupling via which a torque is transmitted between two components by means of an elastic component allowing for relative motions of the components with respect to each other during intended use. Due to the matter of fact that the hydraulic pump and the electric motor are well aligned with respect to each other as both components are mounted to the mounting portion of the supporting device, the driving arrangement according to the present invention allows for use of a mechanical, preferably rigid, coupling to transmit high torques between the electric motor and the hydraulic pump in an efficient and reliable manner.

According to an embodiment, the supporting device comprises a horizontal plate-like base portion for fixing the driving arrangement to the construction machine. The plate-like base portion may be oriented horizontally, when the driving arrangement is attached to the construction machine in the intended fashion. Furthermore, the mounting portion may be vertically provided on the base portion when the driving arrangement is attached to the construction machine in the intended fashion. In other words, the plate-like mounting portion may be provided upright on the horizontal base portion. Both components may be materially bonded to each other, e.g. by welding. This embodiment provides a driving arrangement with low complexity and high mechanical stability. At the same time, it allows for an arrangement with low costs and a compact design. The vertical direction of the driving arrangement may correspond to the vertical direction of the construction machine when the driving arrangement is mounted thereto in the intended fashion. The length direction of the driving arrangement may be parallel to the shaft direction of the hydraulic pump and/or the electric motor and/or orthogonal to the vertical direction. The depth direction of the driving arrangement may be perpendicular to both the vertical direction and the length direction.

According to an embodiment, the driving arrangement further comprises a damping device provided at the supporting device for mounting the driving arrangement to the construction machine via the damping device. The damping device may be provided between the base portion described above and the construction machine to which the driving arrangement is mounted. The damping device may be a mechanical and/or a hydraulic damping device. E.g. the damping device may comprise one or multiple hydraulic damping cylinders and/or one or multiple rubber pads. The damping device results in a high operational safety, as it damps shocks exerted on the driving arrangement through the construction machine, thereby minimizing loads exerted on the hydraulic pump and the electric motor.

According to an embodiment, the supporting device of the driving arrangement comprises a motor support, which may be provided detachably from the supporting device. E.g. the motor support may be mounted to the base portion of the supporting device via one or multiple bolts and/or screws. Alternatively, it is also conceivable that the motor support is provided in a non-detachable fashion, e.g. by being materially bonded, e.g. welded, to the supporting device. The motor support is configured to support the electric motor, namely the end of the electric motor facing away from the mounting portion. With this embodiment, the relatively heavy electric motor is supported at two opposing sides, thereby minimizing loads exerted by the electric motor onto the mounting portion of the supporting device. This embodiment therefore provides a driving arrangement with high mechanical stability.

According to an embodiment, the driving arrangement further comprises a controller for controlling the electric motor and/or the hydraulic pump. The controller may be connected to the electric motor via a cable, e.g. a high voltage cable, to supply currents for powering the motor. The controller may be supported by a controller support, which is mounted to the supporting device. It is conceivable that the controller support is detachable from the supporting device, but it is also possible that it is provided in a non-detachable fashion. By mounting the controller to the supporting device, a positional relationship between the controller and the electric motor and/or the hydraulic pump is fixed. Therefore, stresses exerted on a cable connecting the controller with the electric motor and/or the hydraulic pump are minimized.

According to an embodiment, the controller support is mounted to the mounting surface of the mounting portion to which the hydraulic pump is mounted for positioning the controller above the hydraulic pump in the vertical direction of the driving arrangement. By mounting the control support to the mounting portion, the positional relationship between the controller and the electric motor and/or the hydraulic pump is fixed in a particular effective manner, as both parts are also mounted to said mounting portion. Furthermore, providing the controller above the hydraulic pump allows for an optimal utilization of space, as the hydraulic pump is usually smaller in size than the relatively large electric motor. This embodiment thus allows for a driving arrangement that is very compact and requires little maintenance efforts.

The controller support may have two opposing side portions and a top portion forming an accommodation space in which the controller is situated. The controller may be mounted to the bottom of the top portion and/or to the insights of one or both opposing side portions. With this embodiment, the driving arrangement is compact and exhibits a high operational safety, as the side portions and the top portion protect the controller. Alternatively or additionally, the controller support may exhibit a substantially L-shaped configuration with a first leg mounted to the mounting portion and a second leg extending above the hydraulic pump. The controller may be provided at the second leg, preferably on the side facing away from the hydraulic pump. This latter embodiment provides high mechanical stability and good accessibility to the controller.

The present invention further relates to a construction machine comprising a driving arrangement according to one of the above described embodiments. The construction machine may be an excavator having a configuration as described above.

### BRIEF DESCRIPTION OF THE DRAWINGS

- Fig. 1: shows a driving arrangement for a construction machine according to an embodiment of the present invention in a side view.
- Fig. 2: shows the driving arrangement of Fig. 1 in a perspective view.
- Fig. 3: shows the arrangement of Figs. 1 and 2 in an exploded view.
- Fig. 4: shows a driving arrangement for a construction machine according to a further embodiment in a side view.

### DETAILED DESCRIPTION OF EMBODIMENTS

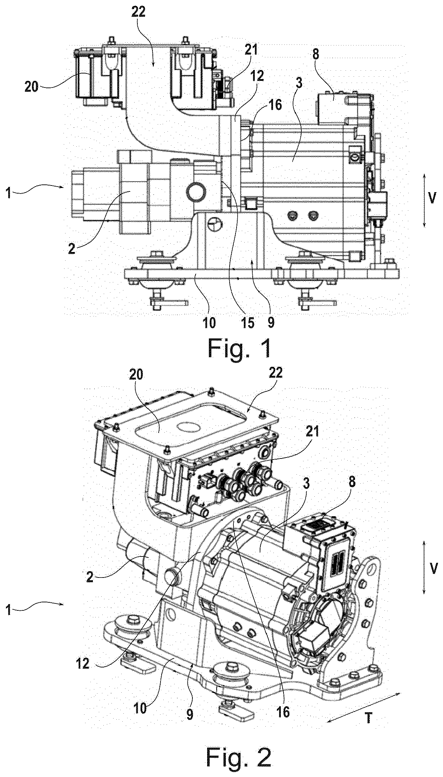

Fig. 1 shows a driving arrangement 1 for a construction machine according to an embodiment of the present invention. In the present embodiment, the construction machine is an excavator comprising an undercarriage and a superstructure, which is pivotably with respect to the undercarriage. On the superstructure of the excavator, an operator's cabin and a boom with a working equipment at its distal end are provided. The excavator may be a pure electric excavator, implying that the locomotion of the excavator, the actuation of the boom and the actuation of the swing drive between the undercarriage and the superstructure are powered by electrical energy only. The electrical energy for powering those devices may be stored in multiple battery modules provided on top of the excavator's superstructure, wherein said battery modules may function as the excavator's counterweight. The excavator may comprise one or multiple electric motors for powering tracks provided at the excavator's undercarriage to move the excavator backwards, forwards and sidewards. In addition, the excavator may comprise an additional electric motor for powering the excavator's swing drive.

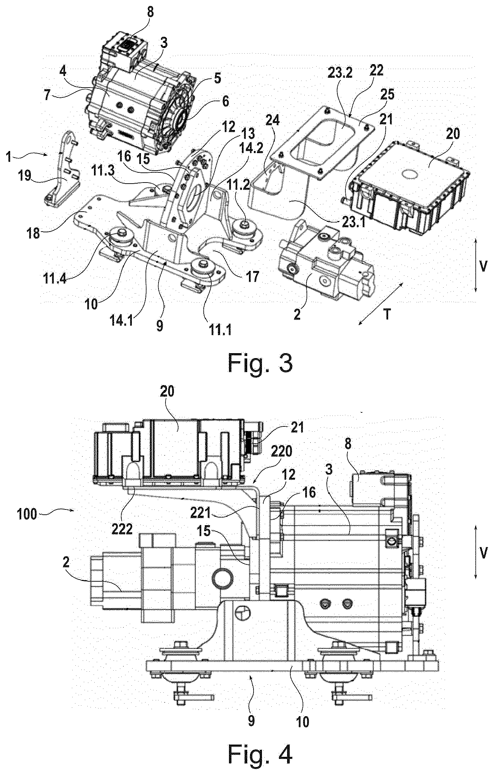

The driving arrangement 1, which is shown in Figs. 1 to 3, may be mounted to the excavator's superstructure. The driving arrangement 1 of the present embodiment comprises a hydraulic pump 2 for powering multiple hydraulic cylinders of the excavator's boom via a hydraulic circuit. Specifically, the excavator comprises a boom with multiple arms, which are movable with respect to each other via hydraulic cylinders. The hydraulic cylinders are part of a hydraulic circuit, which is powered by the hydraulic pump 2 of the driving arrangement 1 of the present embodiment. Furthermore, the driving arrangement 1 comprises an electric motor 3, which is powered by electric energy of the excavator's battery modules. As derivable from Fig. 3, the electric motor 3 exhibits a substantially cylindrical shape with a lateral surface 4 and a front surface 5. The shaft 6 of the electric motor 3 is positioned symmetrically with respect to the lateral surface 4 and is accessible via the front surface 5. Furthermore, the electric motor 3 comprises a back surface 7, which is provided in parallel to the front surface 5. On top of the lateral surface 3, a power connecting unit 8 with a connection port is provided. Via the power connecting unit 8, the electric motor 3 may be supplied with electrical power through a cable, e.g. a high voltage cable.

In addition, the driving arrangement 1 comprises a supporting device 9 for mounting the driving arrangement 1 to the construction machine, namely to the superstructure of the excavator. As derivable from Fig. 3, the supporting device 9 comprises a plate-like base portion 10, which is oriented horizontally when the driving arrangement 1 is attached to the excavator's superstructure in the intended fashion. The base portion 10 exhibits a substantially rectangular, e.g. quadratic, shape. The driving arrangement 1 further comprises a damping device with four individual damping units 11.1, 11.2, 11.3, 11.4 provided at the corners of the base portion 10 and between the base portion 9 and the superstructure of the excavator to absorb vertical shocks exerted on the driving arrangement 1. In the present embodiment, the damping units are configured as damping pads, e.g. rubber pads.

The supporting device 9 comprises a plate-like mounting portion 12, which is vertically provided on the horizontal base portion 10. The mounting portion 12 comprises a substantially rectangular pedestal which merges into a substantially semi-circular shape in vertical direction V. Centrally, the mounting portion 12 comprises a through-hole 13 having a diameter substantially corresponding to half of the width of the mounting portion in depth extension T thereof. The mounting portion 12 is provided at the middle of the base portion 10 and extends substantially parallel to two side surfaces thereof.

Furthermore, the supporting device 9 comprises two strengthening portions 14.1, 14.2, which are formed substantially identical to each other. The strengthening portions 14.1, 14.2 are both formed from a plate-like element having a rectangular portion, wherein triangular fingers are provided on both ends of the rectangular portion. As derivable from Fig. 3, the strengthening portions 14.1 and 14.2 are provided on opposite sides of the mounting portion 12 to stand upright, extend substantially perpendicular to the mounting portion 12 and engage the pedestal portion of the mounting portion 12. The triangular fingers of the strengthening portion 14.1 are oriented towards the triangular finger of the strengthening portion 14.2 and vice versa. With the triangular fingers, the surface contact between the strengthening portions 14.1, 14.2 and the base portion 10 is increased, at the same time providing good accessibility. The strengthening portions 14.1, 14.2 are provided for strengthening the mounting portion 12, in particular for strengthening the positional relationship between the base portion 10 and the mounting portion 12. Each of the base portion 10, the mounting portion 12 and each of the strengthening portions 14.1, 14.2 is respectively integrally formed from a single plate-shaped steel part. Furthermore, the parts are connected to each other via material bonding, preferably welding.

The mounting portion 12 comprises a first mounting surface 15 and a second mounting surface 16, which are provided parallel to each other. As shown in Figs. 1 and 2, the hydraulic pump 2 is mounted to the first mounting surface 15 of the mounting portion 12. Furthermore, the electric motor 3 is mounted to the second mounting surface 16 of the mounting portion 12. Specifically, the front surface 5 of the electric motor 3 engages with the second mounting surface 16 of the mounting portion 12 such that the shaft 6 of the electric motor 3 is accessible through the through-hole 13 formed in the mounting portion 12. Likewise, the hydraulic pump 2 is mounted to the first mounting surface 15 of the mounting portion 12 in such a way that the pump's shaft is accessible through the through-hole 13 of the mounting portion 12. More precisely, the electric motor 3 and the hydraulic pump 2 are mounted to the mounting portion 12 in such a way that the shaft 6 of the electric motor 3 and the shaft of the hydraulic pump 2 are aligned with each other to be connected with a mechanical connection means, e.g. a torque-proof rigid coupling, through the through-hole 13. To fix the positional relationship of the electric motor 3 and the hydraulic pump 2 with respect to each other, both parts are mounted to the mounting portion 12 with multiple bolts and/or screws, which may be positioned around a circumference of the respective component 2, 3.

Furthermore, as derivable from Fig. 3, the base portion 10 exhibits a cut-out 17 between the damping units 11.1, 11.2 provided on the first mounting surface 15 side of the mounting portion 12 for improving accessibility to the hydraulic pump 2. On the other hand, the base portion 10 exhibits a protruding portion 18, which is provided between the damping units 11.3 and 11.4 provided on the second mounting surface 16 side of the mounting portion 12. At the protruding portion 18 of the base portion 10, a motor support 19 is detachably mounted via bolts and/or screws. The motor support 19 further engages via multiple pins with the back surface 7 of the electric motor 3 to support the motor's back end and decrease the moment exerted on the connection between the motor's front surface 5 and the second mounting surface 16 of the mounting portion 12. Furthermore, as derivable from Fig. 2, the electric motor 3 is connected to the supporting device 9 in such a way that the power connection unit 8 is provided on top of the motor 3 to face away from the base portion 10 of the supporting device 9.

In addition, the driving arrangement 1 comprises a controller 20 for controlling the electric motor 3. In particular, the controller 20 comprises at least one connecting port 21 via which the controller 20 is connected to the power connection unit 8 of the electric motor 3 via a cable, e.g. a high voltage cable. In the present embodiment, the controller 20 is provided above the hydraulic pump 2 in vertical direction V of the driving arrangement 1. In particular, the controller 20 does not extend across the electric motor 3. The supporting device 9 comprises a controller support 22 via which the controller 20 is mounted stationary to the first mounting surface 15 of the mounting portion 12 of the supporting device 9. Specifically, the controller support 22 comprises two spaced apart side portions 23.1, 23.2, which are connected with each other via a front portion 24 and a top portion 25. The front portion 24 engages with the first mounting surface 15 of the mounting portion 12 and exhibits a cut-out to avoid interference with the through-hole 13. Likewise, the top portion 25 exhibits a central cut-out. The controller 20 is accommodated in a space formed by the two side portions 23.1, 23.2, the front portion 24 and the top portion 25 of the controller support 22. Specifically, as derivable from Figs. 1 and 2, the controller 20 is provided below the top portion 25, wherein the cut-out in the top portion 25 provides good accessibility to the controller 20. Furthermore, as derivable from Figs. 1 and 2, the connecting port 21 of the controller 20 is oriented towards the power connection unit 8 of the electric motor 3 to minimize a distance therebetween. As the electric motor 3 and the controller 20 are both mounted to the mounting portion 12 of the supporting device 9, a positional relationship between those two parts is fixed with respect to each other. Accordingly, stresses exerted on a cable running between the controller 20 and the power connection unit 8 are minimized.

Fig. 4 shows a driving arrangement 100 according to a further embodiment of the present invention. The driving arrangement 100 according to this further embodiment corresponds to the driving arrangement 1 of the embodiment described in connection with Figs. 1 to 3 except for the below described differences. In the embodiment of Fig. 4, the controller support 220 is formed differently. Specifically, the controller support 220 exhibits a substantially L-like shape with a first leg 221 being mounted to the first mounting surface 15 of the mounting portion 12 and a second leg 222 extending away from the mounting portion 12 and above the hydraulic pump 2. On top of the second leg 222, i.e. on that side of the leg 222 which is facing away from the hydraulic pump 2, the controller 20 is provided.

## Claims

1. A driving arrangement (1) for a construction machine, preferably for an excavator, comprising
a hydraulic pump (2) for powering a working equipment and/or locomotion of the construction machine through a hydraulic circuit;
an electric motor (3) for driving the hydraulic pump (2); and
a supporting device (9) for mounting the driving arrangement (1) to the construction machine, the supporting device (9) comprising a plate-like mounting portion (12) with two opposing mounting surfaces (15, 16);
wherein the hydraulic pump (2) is mounted to one of the mounting surfaces (15) and the electric motor (3) is mounted to the other one of the mounting surfaces (16), and wherein power of the electric motor (3) is transferable to the hydraulic pump (2) via a connection means extending across the mounting portion (12) of the supporting device (9).

2. The driving arrangement (1) according to claim 1, wherein the connection means is configured as a mechanical connection means, preferably as a rigid coupling.

3. The driving arrangement (1) according to one of the preceding claims, the supporting device (9) comprising a horizontal plate-like base portion (10) for fixing the driving arrangement (1) to the construction machine, wherein the mounting portion (12) is provided vertically on the base portion (10) and is materially bonded thereto.

4. The driving arrangement (1) according to one the preceding claims, further comprising a damping device (11.1, 11.2, 11.3, 11.4) provided at the supporting device (9) for mounting the driving arrangement (1) to the construction machine via the damping device (11.1, 11.2, 11.3, 11.4).

5. The driving arrangement (1) according to one of the preceding claims, the supporting device (9) further comprising a motor support (19), which is preferably detachable from the supporting device (9), for supporting the end (7) of the electric motor (3) facing away from the mounting portion (12).

6. The driving arrangement (1) according to one of the preceding claims, further comprising a controller (20) for controlling the electric motor (3) and/or the hydraulic pump (2), wherein the supporting device (9) comprises a controller support (22; 220), which is preferably detachable from the supporting device (9), for supporting the controller (20).

7. The driving arrangement (1) according to claim 6, wherein the controller support (20; 220) is mounted to the mounting surface (15) of the mounting portion (12) to which the hydraulic pump (2) is mounted to position the controller (20) above the hydraulic pump (2).

8. The driving arrangement (1) according to claim 7, wherein the controller support (22) has two opposing side portions (23.1, 23.2) and a top portion (25) forming an accommodation space in which the controller (20) is situated.

9. The driving arrangement (1) according to claim 7, wherein the controller support (220) exhibits a substantially L-shaped configuration with a first leg (221) mounted to the mounting portion (12) and a second leg (222) extending above the hydraulic pump (2), the controller (20) being provided at the second leg (222), preferably on the side facing away from the hydraulic pump (2).

10. Construction machine, preferably excavator, comprising a driving arrangement (1) according to one the preceding claims.
